**Europäisches Patentamt**

**European Patent Office**

**Office européen des brevets**

(19)

(11) **EP 1 522 873 A1**

(12) **EUROPÄISCHE PATENTANMELDUNG**

(43) Veröffentlichungstag:
**13.04.2005 Patentblatt 2005/15**

(51) Int Cl.⁷: **G01S 13/93**, G01S 13/87, G01S 13/46

(21) Anmeldenummer: **04019443.3**

(22) Anmeldetag: **17.08.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **06.10.2003 DE 10346336**

(71) Anmelder: **ROBERT BOSCH GMBH**
**70442 Stuttgart (DE)**

(72) Erfinder:
 • **Schlick, Michael**
  **71229 Leonberg (DE)**
 • **Hoetzel, Juergen**
  **61197 Florstadt (DE)**
 • **Zimmermann, Uwe**
  **71636 Ludwigsburg (DE)**
 • **Moritz, Rainer**
  **70794 Filderstadt (DE)**

 • **Brosche, Thomas**
  **70195 Stuttgart (DE)**
 • **Schaumann, Arno**
  **71638 Ludwigsburg (DE)**
 • **Toennesen, Tore**
  **72760 Reutlingen (DE)**
 • **Winner, Hermann**
  **76467 Bietigheim (DE)**
 • **Pruksch, Achim**
  **74861 Neudenau (DE)**
 • **Uhler, Werner**
  **76646 Bruchsal (DE)**
 • **Sohnke, Thorsten**
  **65835 Liederbach (DE)**
 • **Schmid, Dirk**
  **75397 Simmozheim (DE)**
 • **Weber, Dirk**
  **71701 Schwieberdingen (DE)**

(54) **Multisensor-Ortungsgerät**

(57)     Ortungsgerät mit mehreren Sensoren (S1, S2) zur Messung der Abstände (r1i, r2j) von Objekten (A, B), einem Triangulationsmodul (14) zur Berechnung der Ortskoordinaten (xij, yij) der Objekte anhand der gemessenen Abstände und einem Auswahlmodul (18) zur Unterscheidung zwischen echten Objekten (A, B) und Scheinobjekten (C, D) anhand von Plausibilitätskriterien, dadurch gekennzeichnet, daß ein Geschwindigkeitsmodul (16) dazu vorgesehen ist, zumindest die ersten zeitlichen Ableitungen (vxij, vyij) der Ortskoordinaten direkt anhand der zeitlichen Ableitungen (V1i, V2j) der gemessenen Abstände zu berechnen, und daß im Auswahlmodul (18) mindestens ein Plausibilitätskriterium implementiert ist, das die berecheneten zeitlichen Ableitungen (vxij, vyij) der Ortskoordinaten auswertet.

*Fig. 2*

**Beschreibung**

Stand der Technik

Die Erfindung betrifft ein Ortungsgerät mit mehreren Sensoren zur Messung der Abstände von Objekten, einem Triangulationsmodul zur Berechnung der Ortskoordinaten der Objekte anhand der gemessenen Abstände und einem Auswahlmodul zur Unterscheidung zwischen echten Objekten und Scheinobjekten anhand von Plausibilitätskriterien.

Solche Ortungsgeräte sind insbesondere für den Einbau in Kraftfahrzeuge vorgesehen und dienen dazu, vor dem eigenen Fahrzeug fahrende andere Fahrzeuge zu orten und so eine Datenbasis für eine adaptive Geschwindigkeitsregelung (ACC; Adaptive Cruise Control) zu schaffen, bei der die Geschwindigkeit des eigenen Fahrzeugs mit Hilfe eines nachgeschalteten Reglers automatisch so angepaßt wird, daß ein angemessener Sicherheitsabstand zum vorausfahrenden Fahrzeug eingehalten wird. Dabei muß zwischen Fahrzeugen auf der eigenen Fahrspur und irrelevanten Objekten, beispielsweise Fahrzeugen auf Nebenspuren, unterschieden werden. Deshalb ist es nicht ausreichend, nur die Abstände zu den Objekten zu messen, sondern es müssen die Ortskoordinaten der Objekte in einem zweidimensionalen Koordinatensystem bestimmt werden.

Bei einem Multisensor-Ortungsgerät, wie es z.B aus DE 199 49 409 A1 bekannt ist, werden die Ortskoordinaten durch Triangulation bestimmt. Das Ortungsgerät umfaßt mindestens zwei vorn am Fahrzeug eingebaute Sensoren, die in Querrichtung des Fahrzeugs in einem bestimmten, als Basisbreite bezeichneten Abstand zueinander angeordnet sind, so daß die Ortskoordinaten eines gegebenen Objekts, beispielsweise die x- und y-Koordinaten in einem kartesischen Koordinatensystem, dessen x-Achse mit der Fahrzeuglängsrichtung übereinstimmt, anhand der von den Sensoren gemessenen unterschiedlichen Abstände und anhand der bekannten Basisbreite berechnet werden können. Bei den Sensoren handelt es sich z.B. um gepulste 24-GHz-Radarsensoren, mit denen anhand der Signallaufzeiten der am Objekt reflektierten Radarwellen die Objektabstände und gewünschtenfalls anhand der Dopplerverschiebung auch die Relativgeschwindigkeiten der Objekte gemessen werden können.

Bei einer größeren Anzahl n von Objekten liefert jeder Sensor n Abstandswerte. Im Fall von zwei Sensoren erhält man also insgesamt 2n Abstandswerte. Dabei ist nicht von vornherein klar, wie die Abstandswerte des einen Sensors denen des anderen Sensors zuzuordnen sind. Insgesamt ergeben sich $n^2$ mögliche Kombinationen von Abstandswerten, die eine entsprechende Anzahl von Objektkandidaten repräsentieren. Neben den n realen Objekten erhält man also eine große Anzahl von Scheinobjekten, die nur auf einer fehlerhaften Zuordnung der Abstandswerte beruhen. Diese Scheinobjekte müssen dann durch eine dynamische Objektbeobachtung eliminiert werden. Dabei macht man sich den Umstand zunutze, daß bei den Scheinobjekten häufig unplausible Veränderungen der Koordinatenwerte auftreten, d.h., die Veränderungen der Koordinatenwerte repräsentieren Bewegungen der Objektkandidaten, beispielsweise extreme Längs- oder Querbewegungen, die in einer realen Verkehrssituation nicht zu erwarten sind.

Bei dem bekannten Ortungsgerät wird zunächst für jeden Sensor eine Einzelsensorliste erstellt, in der die gemessenen Abstandswerte steigend geordnet sind. Beginnend mit den kleinsten Abstandswerten werden dann für alle denkbaren Kombinationen von Abstandswerten aus den verschiedenen Listen die zugehörigen Ortskoordinaten berechnet, und es wird eine Multisensorliste erstellt, in der alle Objektkandidaten durch ihre Ortskoordinaten repräsentiert sind. Die Radarmessungen und die oben beschriebenen Auswertungsschritte werden periodisch wiederholt, beispielsweise in Intervallen in der Größenordnung von einer Millisekunde. In einer sogenannten Tracking-Prozedur werden die Bewegungen der Objektkandidaten über mehrere Meßzyklen hinweg verfolgt. Wenn sich dabei zeigt, daß ein Objektkandidat eine unplausible Bewegung ausführt, so wird dieser Kandidat als Scheinobjekt identifiziert und bei der weiteren Auswertung unberücksichtigt gelassen.

Da einerseits die Anzahl der bei der Tracking-Prozedur zu verfolgenden Scheinobjekte sehr groß werden kann und andererseits die Objektortung in Echtzeit durchgeführt werden muß, erfordert das bekannte Verfahren einen hohen Ressourcenaufwand, insbesondere eine hohe Rechen- und Speicherkapazität. Dabei ist zu berücksichtigen, daß auch ein einzelnes Fahrzeug, insbesondere ein Lkw mit einer stark zerklüfteten Rückfront, in der Praxis zumeist mehrere Reflexionsschwerpunkte bildet, die bei der Auswertung zunächst als getrennte Objekte interpretiert werden. Dies führt zu einer beträchtlichen Erhöhung der Anzahl der zu verfolgenden Objektkandidaten, mit der Folge, daß sich der Ressourcenbedarf für die Verwaltung und Abarbeitung der Multisensorliste weiter erhöht.

Vorteile der Erfindung

Durch die Erfindung wird ein Ortungsgerät geschaffen, das eine verläßliche Objektortung mit vermindertem Ressourcenbedarf ermöglicht.

Dies wird bei einem Ortungsgerät der eingangs genannten Art dadurch erreicht, daß ein Geschwindigkeitsmodul dazu vorgesehen ist, zumindest die ersten zeitlichen Ableitungen der Ortskoordinaten direkt anhand der zeitlichen Ableitungen der gemessenen Abstände zu berechnen, und daß im Auswahlmodul mindestens ein Plausibilitätskriterium implementiert ist, das die berechneten zeitlichen Ableitungen der Ortskoordinaten auswertet.

Bei dem erfindungsgemäßen Ortungsgerät enthalten die für jeden einzelnen Sensor erstellten Einzelsensorlisten neben den Abstandsdaten auch die jeweils zugehörigen Relativgeschwindigkeiten. Diese lassen sich im Prinzip durch Ableitung der Abstandsdaten nach der zeit berechnen, werden jedoch vorzugsweise direkt mit Hilfe der Radarsensoren gemessen. Im Triangulationsmodul werden in bekannter Weise anhand der Abstandsdaten die Ortskoordinaten für jeden Objektkandidaten berechnet. Ergänzend werden im Geschwindigkeitsmodul zumindest auch die ersten zeitlichen Ableitungen der Ortskoordinaten berechnet, also beispielsweise die Relativgeschwindigkeiten des Objekts in x- und y-Richtung. Für diese Berechnungen braucht nicht auf die Tracking-Prozedur zurückgegriffen zu werden, da sich die x-und y-Komponenten der Geschwindigkeit direkt aus den aus den Einzelsensorlisten übernommenen Radialgeschwindigkeiten berechnen lassen. Die Längs- und Quergeschwindigkeiten (oder auch die Winkelgeschwindigkeiten im Falle von Polarkoordinaten) der Objektkandidaten stehen deshalb schon zu einem wesentlich früheren Zeitpunkt zur Verfügung als bei dem herkömmlichen Verfahren. Somit ist es möglich, anormale oder unplausible Geschwindigkeitskomponenten eines Objektkandidaten schon bei der Triangulation zu erkennen und den betreffenden Kandidaten sofort zu eliminieren. Auf diese Weise wird der Umfang der zu bearbeitenden Multisensorliste beträchtlich reduziert.

Vorteilhafte Weiterbildungen und Ausgestaltungen der Erfindung ergeben sich aus den Unteransprüchen.

Eine zusätzliche Vereinfachung der Auswertung und eine weitere Verminderung des Ressourcenbedarfs wird dadurch ermöglicht, daß die vom Geschwindigkeitsmodul berechneten Geschwindigkeiten der echten Objekte direkt vom Tracking-Modul übernommen werden können, um die Bewegungen dieser Objekte zu verfolgen.

Da zumindest ein Teil der Plausibilitätsprüfungen unabhängig von der Tracking-Prozedur vorgenommen werden kann, besteht auch die vorteilhafte Möglichkeit, die Zykluszeit des Triangulationsalgorithmus von der Zykluszeit bei der Einzelsensor-Signalverarbeitung zu entkoppeln.

Wenn ein einzelnes Fahrzeug mehrere Reflexionsschwerpunkte bildet, so werden die Objektkandidaten, die diesen Reflexionsschwerpunkten entsprechen, nicht nur dieselbe y-Geschwindigkeitskomponente, sondern auch dieselbe x-Geschwindigkeitskomponente aufweisen. Daran lassen sich diese Objektkandidaten mit hoher Zuverlässigkeit als zusammengehörig erkennen. Gemäß einer vorteilhaften weiterbildung der Erfindung werden deshalb die Objektkandidaten, die nicht als unplausibel verworfen werden, zu Clustern zusammengefaßt, die im wesentlichen dieselbe (vektorielle) Geschwindigkeit haben. Da alle Mitglieder eines Clusters dasselbe physikalische Objekt repräsentieren, braucht in die Multisensorliste für jeden Cluster nur ein einziger Repräsentant übernommen zu werden, vorzugsweise derjenige mit dem kleinsten Abstand, d.h., mit der kleinsten x-Koordinate. Hierdurch wird die Verarbeitung der Multisensorliste noch einmal ganz wesentlich vereinfacht.

Zeichnung

Ein Ausführungsbeispiel der Erfindung ist in den Zeichnungen dargestellt und in der nachfolgenden Beschreibung näher erläutert.

Es zeigen:

Figur 1 eine Skizze zur Erläuterung der Funktionsweise des Ortungsgerätes;

Figur 2 ein Blockdiagramm des Ortungsgerätes; und

Figur 3 ein Flußdiagramm zur Erläuterung der Arbeitsweise des Ortungsgerätes.

Beschreibung des Ausführungsbeispiels

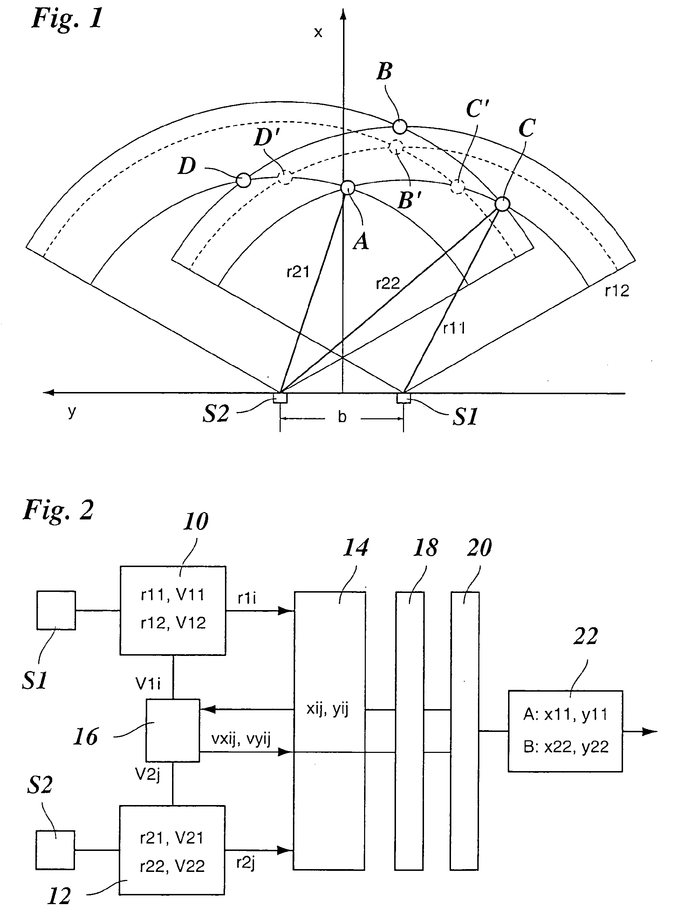

In Figur 1 sind in einem zweidimensionalen kartesischen Koordinatensystem zwei Objekte A und B eingezeichnet, die mit zwei abstandssensitiven Sensoren S1 und S2 geortet werden. Bei den Sensoren S1, S2 handelt es sich z.B. um Radarsensoren, die an der Frontpartie eines nicht gezeigten Kraftfahrzeugs eingebaut sind, dessen Längsmittelachse mit der x-Achse des Koordinatensystems zusammenfällt. Die Sensoren sind symmetrisch zur x-Achse in einem bestimmten, als Basisbreite b bezeichneten Abstand zueinander angeordnet.

Bei den Objekten A und B kann es sich z.B. um zwei vorausfahrende Fahrzeuge handeln oder, genauer, um idealisiert als punktförmig angenommene Reflexionsschwerpunkte dieser Fahrzeuge. Das Objekt A hat zum Sensor S1 den Abstand r11 und zum Sensor S2 den Abstand r21. Das Objekt B hat zum Sensor S1 den Abstand r12 und zum Sensor S2 den Abstand r22. Die Orte gleichen Abstands zu den Sensoren S1 und S2 sind in der Zeichnung durch Kreisbögen dargestellt. Jeder der Sensoren S1, S2 empfängt Radarwellen, die von den beiden Objekten A und B reflektiert werden. Die Amplitudenmaxima der empfangenen Signale haben Signallaufzeiten, die den jeweiligen Objektabständen entsprechen. Es ist jedoch zunächst unbekannt, welches Amplitudenmaximum von welchem Objekt herrührt. Das empfangene Signalmuster könnte deshalb auch durch zwei andere Objekte C und D verursacht sein, die ebenfalls auf Schnittpunkten der Kreisbögen mit den Radien r11, r12, r21, r22 liegen. In dem vereinfachten Beispiel gemäß Figur 1, bei dem nur zwei reale Objekte A, B vorhanden sind, liefert die Messung also insgesamt vier Objektkandidaten, nämlich die beiden realen Objekte A, B entsprechend den Abstandspaaren r11, r21 und r12, r22 und zwei Scheinobjekte C, D entsprechend den Abstandspaaren r11, r22 und r12, r21. Im allgemeinen Fall, bei n realen Objekten, erhält man $n^2$ Objektkandidaten entsprechend allen möglichen Paarungen der von den Sensoren S1, S2 gemessenen Abstände. Bei welchen dieser Objektkandidaten es sich um die realen Objekte handelt, muß in einem späteren Auswertungsschritt entschieden werden.

Die x- und y-Koordinaten der Objektkandidaten können durch Triangulation aus den gemessenen Abstandsdaten berechnet werden. Zum Beispiel erhält man für das Scheinobjekt C mit den Koordinaten (x, y) aus dem Satz des Pythagoras die Beziehungen:

$$r11^2 = x^2 + (y + b/2)^2 \tag{1}$$

$$r22^2 = x^2 + (y - b/2)^2 \tag{2}$$

Ausmultiplizieren der Gleichungen (1) und (2) ergibt

$$r11^2 = x^2 + y^2 + b{*}y + b^2/4 \tag{3}$$

$$r22^2 = x^2 + y^2 - b{*}y + b^2/4 \tag{4}$$

Durch Subtraktion der Gleichung (4) von der Gleichung (3) erhält man

$$y = (r11^2 - r22^2)/2b \tag{5}$$

Addition der Gleichungen (3) und (4) ergibt

$$2{*}x^2 = r11^2 + r22^2 - 2{*}y^2 - b^2/2$$

und aufgelöst nach x:

$$x = [(r11^2 + r22^2)/2 - y^2 - b^2/4]^{1/2} \tag{6}$$

Hier kann für y der aus Gleichung (5) erhaltene Wert eingesetzt werden, so daß sich beide Koordinaten x und y aus den gemessenen Objektabständen r11 und r22 und der bekannten Basisbreite b berechnen lassen. Auf analoge Weise lassen sich auch die Koordinaten der übrigen Objektkandidaten berechnen.

Differenziert man die Gleichung (5) nach der Zeit, so erhält man:

$$vy := dy/dt = (r11{*}V11 - r22{*}V22)/b \tag{7}$$

Darin sind V11 = d(r11)/dt und V22 = d(r22)/dt die Radialgeschwindigkeiten, die anhand des Dopplereffektes direkt mit Hilfe der Sensoren S1 und S2 gemessen werden können.

Differenziert man die Gleichung (6) nach der Zeit, so erhält man

$$vx := dx/dt = \frac{r11{*}V11 + r22{*}V22 - 2{*}y{*}vy}{2{*}[(r11^2 + r22^2)/2 - y^2 - b^2/4]^{1/2}} \tag{8}$$

Hier können y und vy wieder aus Gleichungen (5) und (7) eingesetzt werden.

Sobald die Koordinaten eines Objektkandidaten durch Triangulation bestimmt worden sind, lassen sich somit auch die zeitlichen Ableitungen dieser Koordinaten, also die x- und y-Komponenten vx, vy der Geschwindigkeit des Objektkandidaten direkt berechnen.

Falls erwünscht, lassen sich auf analoge weise auch höhere Ableitungen der Koordinaten berechnen, wobei allerdings die hierzu benötigten Ableitungen der Radialgeschwindigkeiten V11, V22 jeweils aus kurz hintereinander durchgeführten Messungen zu bestimmen sind.

Die Kenntnis der Geschwindigkeiten und ggf. der höheren Ableitungen der Koordinaten ermöglicht es in den meisten praktischen Fällen, zumindest einige der Objektkandidaten sofort als Scheinobjekte zu erkennen, wie nun unter Bezugnahme auf Figur 1 erläutert werden soll.

In Figur 1 ist als Beispiel angenommen worden, daß das Objekt A relativ zu den Sensoren ruht, während sich das Objekt B den Sensoren annähert, also negative Radialgeschwindigkeiten in Bezug auf die beiden Sensoren aufweist. In der Zeichnung wird das dadurch symbolisiert, daß für das Objekt B und für die Scheinobjekte C und D gestrichelt die Objektpositionen B', C', D' eingezeichnet sind, die sich nach Ablauf eines kurzen Zeitintervalls Δt ergäben, also zu einem Zeitpunkt, an dem r12 um V12*Δt und r22 um V22*Δt abgenommen hat. Man erkennt, daß die x-Koordinate des Objekts B um einen entsprechenden, relativ kleinen Betrag abgenommen hat. Für das Scheinbjekt C ist dagegen die Position C' relativ weit seitlich zu der ursprünglichen Position versetzt, d.h., die y-Koordinate hat um einen verhältnismäßig großen Betrag zugenommen, was einer großen Geschwindigkeitskomponente des Objekts C in y-Richtung entspräche. Entsprechend beobachtet man auch bei dem Objekt D eine relativ große Geschwindigkeitskomponente in negativer y-Richtung.

In einer realen Verkehrssituation unterliegt aber die Relativgeschwindigkeit eines Objekts gewissen physikalischen Beschränkungen. Insbesondere sind die Relativgeschwindigkeiten in Richtung der y-Achse dem Betrage nach relativ klein, weil sowohl das vorausfahrende Fahrzeug als auch das eigene Fahrzeug nur langsame Querbewegungen ausführen können. Auch Querbewegungen, die durch eine Gierbewegung des eigenen, die Sensoren S1, S2 tragenden Fahrzeugs vorgetäuscht werden, sind dem Betrage nach gering. Für jede Geschwindigkeitskomponente läßt sich deshalb ein bestimmtes Intervall angeben, innerhalb dessen "plausible" Werte für vy liegen müssen, wobei die Intervallgrenzen von anderen die Verkehrssituation kennzeichnenden Parametern, insbesondere von der Absolutgeschwindigkeit und der Giergeschwindigkeit des eigenen Fahrzeugs abhängig sein können. Auch für die Relativgeschwindigkeiten in Richtung der x-Achse gibt es physikalische Grenzen. Wenn eine der in der oben beschriebenen Weise berechneten Geschwindigkeitskomponenten vx oder vy für einen Objektkandidaten außerhalb der Plausibilitätgrenzen liegt, so läßt sich sofort entscheiden, daß der betreffende Objektkandiat ein Scheinobjekt ist.

Wenn ein einzelner Objektkandidat als Scheinobjekt identifiziert wurde, wie im gezeigten Beispiel der Objektkandidat C, so schränkt dies zugleich die Auswahl für die realen Objekte unter den verbleibenden Objektkandidaten weiter ein. Es muß nämlich mindestens ein reales Objekt geben, das zum Sensor S1 den gleichen Abstand (r11) hat wie das erkannte Scheinobjekt C. Im gezeigten Beispiel kann dies nur das Objekt A sein. Ebenso muß es mindestens ein reales Objekt B geben, das zum Sensor S2 den gleichen Abstand (r22) hat wie das Scheinobjekt C. Damit steht in der vereinfachten Beispielsituation nach Figur 1 bereits fest, daß A und B die realen Objekte sind, und D kann folglich als Scheinobjekt erkannt werden, selbst wenn die berechneten Geschwindigkeitskomponenten für D noch innerhalb der Plausibilitätsgrenzen liegen sollten. Aufgrund dieses Zusammenhangs gibt es eine hohe Wahrscheinlichkeit, daß Scheinobjekte auch wirklich als solche erkannt werden.

Selbstverständlich gibt es auch physikalische Plausibilitätsgrenzen für die Komponenten der Relativbeschleunigungen in y-Richtung und insbesondere auch in x-Richtung. Durch Einbziehung höherer Ableitungen der Ortskoordinaten läßt sich daher die Wahrscheinlichkeit, Scheinobjekte aufzuspüren, noch weiter erhöhen.

In Figur 2 ist der Aufbau eines Ortungsgerätes, das nach dem oben beschriebenen Funktionsprinzip arbeitet, anhand eines Blockdiagramms dargestellt. Der Sensor S1 liefert die gemessenen Abstände r11, r12 und die zugehörigen Radialgeschwindigkeiten V11, V12 an eine Auswerteeinrichtung, die anhand dieser Daten eine nach wachsenden Abständen sortierte Einzelsensorliste 10 anlegt. Wenn der Sensor S1 alle realen Objekte erfaßt, entspricht die Anzahl der Einträge in der Einzelsensorliste 10 also der Anzahl n der realen Objekte (im betrachteten Beispiel ist n = 2). Jedes Objekt ist in der Einzelsensorliste durch seinen Abstand r11 bzw. r12 repräsentiert. Zusätzlich ist für jedes Objekt die zugehörige Radialgeschwindigkeit V11 bzw. V12 angegeben. Entsprechend wird für die Meßdaten des Sensors S2 eine Einzelsensorliste 12 angelegt, die die gemessenen Abstände r21, r22 und die zugehörigen Radialgeschwindigkeiten V21, V22 enthält.

Die Abstandsdaten rli (i = 1 ... n) und r2j (j = 1 ... n) aus beiden Einzelsensorlisten werden einem Triangulationsmodul 14 zugeführt, das daraus für alle n$^2$ Objektkandidaten die Koordinaten xij, yij berechnet. Ein Geschwindigkeitsmodul 16 berechnet für jeden Objektkandidaten die Geschwindigkeitskomponenten vxij und vyij und greift dabei auf die vom Triangulationsmodul 14 berechneten Koordinatenwerte sowie auf die in den Einzelsensorlisten 10, 12 gespeicherten Radialgeschwindigkeiten Vli, V2j zu. Die Ergebnisse werden zusammen mit den Koordinaten xij, yij an ein Auswahlmodul 18 weitergeleitet, das eine nach steigenden x-Koordinaten geordnete Multisensorliste aller Objektkandidaten anlegt und der Reihe nach für jeden Objektkandidaten überprüft, ob die Geschwindigkeitskomponenten vxij und vyij die jeweils zugehörigen Plausibilitätsgrenzen einhalten. Die Kandidaten, für welche mindestens eine Plausibilitätsgrenze verletzt ist (im gezeigten Beispiel der Objektkandidat C) werden hier eliminiert, ebenso die Kandidaten, die dann zwangsläufig ebenfalls Scheinobjekte sein müssen, wie im gezeigten Beispiel der Objektkandidat D. Nur die verbliebenen Kandidaten, die dann mit hoher Wahrscheinlichkeit reale Objekte sind, werden an die nachgeordneten Verarbeitungsstufen weitergeleitet.

Im gezeigten Beispiel ist dem Auswahlmodul 18 ein Clustermodul 20 nachgeordnet, das die Geschwindigkeitskomponenten vxij, vyij der verbliebenen Kandidaten daraufhin untersucht, ob es Gruppen (Cluster) von Kandidaten gibt, die sowohl eine übereinstimmende x-Komponente als auch eine übereinstimmende y-Komponente der Geschwindigkeit aufweisen. Die Kandidaten eines solchen Clusters repräsentieren mit an Sicherheit grenzender Wahrscheinlichkeit verschiedene Reflexionszentren ein und desselben physikalischen Objekts, beispielsweise verschiedene Teile der Rückfront ein und desselben Fahrzeugs. Sie können deshalb als ein einziges reales Objekt behandelt werden. Dementsprechend wählt das Clustermodul 20 aus jedem Cluster dasjenige Objekt aus, das die kleinste x-Koordinate hat, also dem mit den Sensoren S1 und S2 ausgerüsteten Fahrzeug am nächsten ist.

In dem sehr einfachen, Beispiel nach Figur 1 sind keine solchen Cluster vorhanden, so daß das Clustermodul 20 wirkungslos bleibt. In der Praxis treten solche Cluster jedoch sehr häufig auf, so daß durch das Clustermodul 20 eine beträchtliche Reduzierung der Anzahl der verbliebenen Objekte erreicht wird. Die Multisensorliste mit den verbliebenen Objekten, die nun als reale Objekte zu betrachten sind, wird an ein Trackingmodul 22 übergeben. Im gezeigten Beispiel enthält die Multisensorliste die realen Objekte A und B mit den Koordinaten (x11, y11) und (x22, y22). Vorzugsweise enthält sie auch die zugehörigen Geschwindigkeiten (vx11, vy11) und (vx22, vy22).

Die Indizes 11 und 22 sind hier die Indizes ij aus den Einzelsensorlisten 10 und 12.

Wenn in aufeinanderfolgenden Meßzyklen neue Daten von den Sensoren S1 und S2 eintreffen, speichert das Trackingmodul die Daten der realen Objekte für mehrere aufeinanderfolgende Meßzyklen, und durch Abgleich der neuen Koordinaten mit den gespeicherten vorherigen Koordinaten und Geschwindigkeiten werden die Bewegungen der einzelnen Objekte verfolgt. Dabei können auch noch weitere Plausibilitätskriterien überprüft werden, um etwa noch in der Liste enthaltene Scheinobjekte nachträglich zu eliminieren. Die Daten der auf diese Weise verfolgten Objekte stehen dann für die Auswertung beispielsweise in einem adaptiven Geschwindigkeitsregler zur Verfügung.

Um Rechenkapazität zu sparen, läßt sich das beschriebene Ausführungsbeispiel so modifizieren, daß die Verarbeitungsoperationen im Auswahlmodul 18 und im Clustermodul 20 und ggf. auch die Operationen im Triangulationsmodul 14 und im Geschwindigkeitsmodul 16 nicht in jedem einzelnen Meßzyklus, sondern nur in größeren Intervallen ausgeführt zu werden brauchen.

Dazu ist es zweckmäßig, in der Objektliste im Trackingmodul 22 für jedes Ojekt zusätzlich auch die zugehörigen Einträge aus den Einzelsensorlisten 10, 12 zu speichern. Da diese Speicherung nur für die realen Objekte erfolgt, ist der zusätzliche Speicherplatzbedarf gering. Der Vorteil besteht darin, daß nun das Tracking auch direkt an den Einzelsensordaten ausgeführt werden kann.

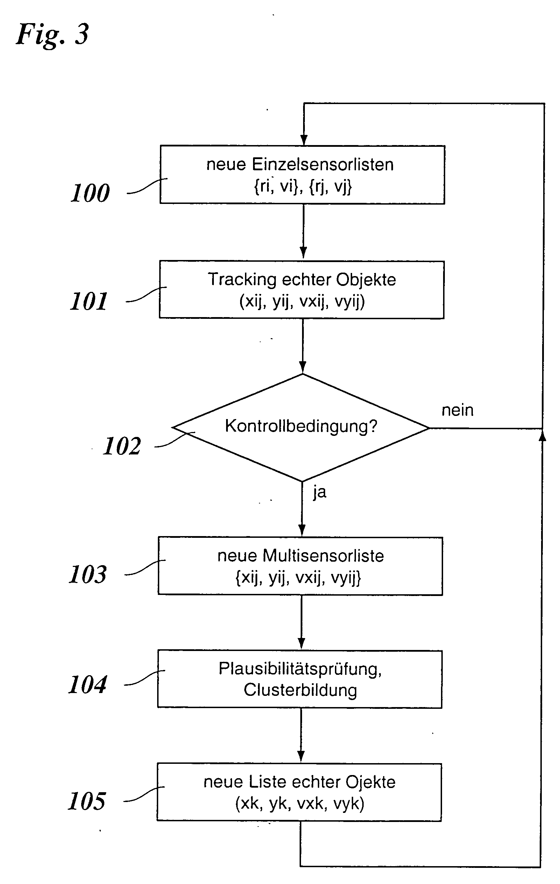

Ein möglicher Verfahrensablauf ist in Figur 3 anhand eines Flußdiagramms dargestellt. Dabei soll angenommen werden, daß in vorausgegangenen Meß- und Trackingzyklen bereits eine Anzahl realer Objekte identifiziert wurde. In Schritt 100 werden neue Einzelsensorlisten 10, 12 für den aktuellen Meßzyklus erstellt. In Schritt 101 werden durch eine Trackingprozedur die neuen Einträge in den Einzelsensorlisten mit den entsprechenden vorherigen Einträgen für die bereits bekannten realen Objekte identifiziert. Die Berechnungen im Triangulationsmodul 14 und im Geschwindigkeitsmodul 16 brauchen dann nur für die wenigen Indexpaare i, j durchgeführt zu werden, die bekannten realen Objekten entsprechen, und die Ergebnisse können unmittelbar an das Trackingmodul 22 übergeben werden.

In Schritt 102 wird überprüft, ob eine von mehreren Kontrollbedingungen, die nachstehend näher erläutert werden, erfüllt ist oder nicht. Wenn keine Kontrollbedingung erfüllt ist, erfolgt ein Rücksprung zu Schritt 100, und die Schritte 100 bis 102 werden für den nächsten Meßzyklus erneut durchlaufen.

Eine der in Schritt 102 überprüften Kontrollbedingungen besteht darin, daß ein neues Objekt auftaucht, d.h., daß mindestens einer der Sensoren S1, S2 einen Abstand und eine Radialgeschwindigkeit mißt, die sich keinem bekannten Objekt zuordnen lassen. Eine weitere Kontrollbedingung kann darin bestehen, daß ein bisher verfolgtes Objekt verloren geht. Schließlich kann eine Kontrollbedingung darin bestehen, daß die Schleife mit den Schritten 100 bis 102 eine bestimmte Anzahl von Malen durchlaufen wurde, ohne daß eine der anderen Kontrollbedingungen eingetreten ist.

Wenn mindestens eine dieser Kontrollbedingungen erfüllt ist, wird zu Schritt 103 verzweigt, und im auswahlmodul 18 wird mit Hilfe des Triangulationsmoduls 14 und des Geschwindigkeitsmoduls 16 eine neue Multisensorliste erstellt, die nun sämtliche Indexpaare i, j enthält und somit sämtliche Objektkandidaten repräsentiert. In Schritt 104 werden dann im Auswahlmodul 18 die Plausibilitätsprüfungen für alle Mitglieder der Multisensorliste und ggf. im Clustermodul 20 die Clusterbildung durchgeführt. In Schritt 105 wird dann eine neue Liste echter Objekte an das Trackingmodul 22 übergeben, und die Objekte weren dort verfolgt.Danach erfolgt ein Rücksprung zu Schritt 100.

Durch diesen Verfahrensablauf ist sichergestellt, daß die rechenaufwendigen Schritte 103 und 104 nicht in jedem Meßzyklus ausgeführt zu werden brauchen, sondern nur dann, wenn wirklich Bedarf besteht oder wenn ein längeres, mehrere Meßzyklen umfassendes Zeitintervall vergangen ist.

**Patentansprüche**

1. Ortungsgerät mit mehreren Sensoren (S1, S2) zur Messung der Abstände (rli, r2j) von Objekten (A, B), einem Triangulationsmodul (14) zur Berechnung der Ortskoordinaten (xij, yij) der Objekte anhand der gemessenen Abstände und einem Auswahlmodul (18) zur Unterscheidung zwischen echten Objekten (A, B) und Scheinobjekten (C, D) anhand von Plausibilitätskriterien, **dadurch gekennzeichnet, daß** ein Geschwindigkeitsmodul (16) dazu vorgesehen ist, zumindest die ersten zeitlichen Ableitungen (vxij, vyij) der Ortskoordinaten direkt anhand der zeitlichen Ableitungen (V1i, V2j) der gemessenen Abstände zu berechnen, und daß im Auswahlmodul (18) mindestens ein Plausibilitätskriterium implementiert ist, das die berecheneten zeitlichen Ableitungen (vxij, vyij) der Ortskoordinaten auswertet.

2. Ortungsgerät nach Anspruch 2, **dadurch gekennzeichnet, daß** die Sensoren (S1, S2) Radarsensoren sind, die dazu ausgebildet sind, die zeitlichen Ableitungen (V1i, V2j) der gemessenen Objektabstände direkt zu messen.

3. Ortungsgerät nach Anspruch 1 oder 2, **gekennzeichnet durch** ein Trackingmodul (22), das die Ortskoordinaten der echten Objekte (A, B) über mehrere Meßzyklen der Sensoren (S1, S2) hinweg verfolgt.

4. Ortungsgerät nach Anspruch 3, **dadurch gekennzeichnet, daß** das Trackingmodul (22) dazu ausgebildet ist, die im aktuellen Meßzyklus der Sensoren (S1, S2) gemessenen Abstände mit in vorangegangenen Zyklen gemessenen Abständen von echten Objekten (A, B) zu identifizieren.

5. Ortungsgerät nach Anspruch 4, **dadurch gekennzeichnet, daß** der Arbeitszyklus des Auswahlmoduls (18) vom Meßzyklus der Sensoren (S1, S2) verschieden ist.

6. Ortungsgerät nach einem der vorstehenden Ansprüche, **gekennzeichnet durch** ein Clustermodul (20), das potentielle Objekte, nach der Berechnung der Ortskoordinaten (xij, yij) und der zeitlichen Ableitungen (vxij, vyij) derselben derart zu Clustern zusammenfaßt, daß für die potentiellen Objekte innerhalb eines Clusters die zeitlichen Ableitungen der einander entsprechenden Ortskoordinaten übereinstimmen.

*Fig. 1*

*Fig. 2*

## Fig. 3

100 — neue Einzelsensorlisten
{ri, vi}, {rj, vj}

101 — Tracking echter Objekte
(xij, yij, vxij, vyij)

102 — Kontrollbedingung?

nein

ja

103 — neue Multisensorliste
{xij, yij, vxij, vyij}

104 — Plausibilitätsprüfung,
Clusterbildung

105 — neue Liste echter Ojekte
(xk, yk, vxk, vyk)

**Europäisches Patentamt**

Nummer der Anmeldung

EP 04 01 9443

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,X | DE 199 49 409 A (BOSCH GMBH ROBERT) 19. April 2001 (2001-04-19) | 1,3-5 | G01S13/93 G01S13/87 G01S13/46 |
| Y | * das ganze Dokument * ----- | 2,6 | |
| X | EP 0 742 447 A (ERICSSON TELEFON AB L M) 13. November 1996 (1996-11-13) * Spalte 1, Zeile 25 - Spalte 2, Zeile 22; Abbildungen 1-9 * ----- | 1 | |
| Y | REED J C: "Side zone automotive radar" RADAR CONFERENCE, 1997., IEEE NATIONAL SYRACUSE, NY, USA 13-15 MAY 1997, NEW YORK, NY, USA,IEEE, US, 13. Mai 1997 (1997-05-13), Seiten 186-190, XP010224762 ISBN: 0-7803-3731-X * das ganze Dokument * ----- | 2 | |
| Y | US 6 085 151 A (MICHAEL E FARMER ET AL.) 4. Juli 2000 (2000-07-04) * Spalte 12, Zeilen 5-17,47-59; Abbildungen 8,10-13 * ----- | 6 | RECHERCHIERTE SACHGEBIETE (Int.Cl.7) G01S |
| Y | EP 0 933 725 A (FUJI JUKOGYO KABUSHIKI KAISHA, TOKYO (JP)) 4. August 1999 (1999-08-04) * Absätze [0006], [0023], [0024]; Abbildungen 3-5,13 * ----- | 6 | |
| A | EP 0 918 232 A (TAKATA CORP ; OLYMPUS OPTICAL CO (JP)) 26. Mai 1999 (1999-05-26) * Absätze [0012] - [0014], [0056], [0059]; Abbildung 5B * ----- | 2 | |
| A | DE 198 42 250 A (MANNESMANN VDO AG) 16. März 2000 (2000-03-16) * das ganze Dokument * ----- | 1-6 | |

-/--

Der vorliegende Recherchenbericht wurde für alle Patentansprüche erstellt

| Recherchenort | Abschlußdatum der Recherche | Prüfer |
|---|---|---|
| München | 21. Dezember 2004 | Schmelz, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**Europäisches Patentamt**

## EUROPÄISCHER RECHERCHENBERICHT

Nummer der Anmeldung

EP 04 01 9443

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | OPRIAN D ET AL: "Tracking systems for automotive radar networks" RADAR 2002, CONFERENCE PROCCEDINGS, 15. Oktober 2002 (2002-10-15), Seiten 339-343, XP010626890 EDINBURGH, UK * das ganze Dokument * ----- | 1-6 | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| München | 21. Dezember 2004 | Schmelz, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..............................................................................................
& : Mitglied der gleichen Patentfamilie, übereinstimmendes Dokument

EPO FORM 1503 03.82 (P04C03)

**EP 1 522 873 A1**

## ANHANG ZUM EUROPÄISCHEN RECHERCHENBERICHT
## ÜBER DIE EUROPÄISCHE PATENTANMELDUNG NR.

EP 04 01 9443

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-12-2004

| Im Recherchenbericht angeführtes Patentdokument | | Datum der Veröffentlichung | Mitglied(er) der Patentfamilie | | Datum der Veröffentlichung |
|---|---|---|---|---|---|
| DE 19949409 | A | 19-04-2001 | DE | 19949409 A1 | 19-04-2001 |
| | | | JP | 2001159680 A | 12-06-2001 |
| | | | US | 6727844 B1 | 27-04-2004 |
| EP 0742447 | A | 13-11-1996 | SE | 515621 C2 | 10-09-2001 |
| | | | DE | 69614916 D1 | 11-10-2001 |
| | | | DE | 69614916 T2 | 11-04-2002 |
| | | | EP | 0742447 A1 | 13-11-1996 |
| | | | SE | 9501694 A | 09-11-1996 |
| | | | US | 5739789 A | 14-04-1998 |
| US 6085151 | A | 04-07-2000 | CA | 2274716 A1 | 23-07-1998 |
| | | | EP | 0954758 A1 | 10-11-1999 |
| | | | JP | 2002511922 T | 16-04-2002 |
| | | | WO | 9832030 A1 | 23-07-1998 |
| EP 0933725 | A | 04-08-1999 | JP | 3516856 B2 | 05-04-2004 |
| | | | JP | 11213138 A | 06-08-1999 |
| | | | EP | 0933725 A2 | 04-08-1999 |
| | | | US | 2003099377 A1 | 29-05-2003 |
| | | | US | 6370261 B1 | 09-04-2002 |
| EP 0918232 | A | 26-05-1999 | JP | 11142112 A | 28-05-1999 |
| | | | EP | 0918232 A2 | 26-05-1999 |
| | | | US | 6097476 A | 01-08-2000 |
| DE 19842250 | A | 16-03-2000 | DE | 19842250 A1 | 16-03-2000 |
| | | | DE | 59907610 D1 | 11-12-2003 |
| | | | EP | 0987563 A2 | 22-03-2000 |
| | | | KR | 2000023167 A | 25-04-2000 |
| | | | US | 6289282 B1 | 11-09-2001 |

EPO FORM P0461

Für nähere Einzelheiten zu diesem Anhang : siehe Amtsblatt des Europäischen Patentamts, Nr.12/82